# EUROPEAN PATENT APPLICATION

(11) **EP 1 401 152 A2**
(43) Date of publication of application: **24.03.2004**
(21) Application number: 03021050.4
(22) Date of filing: 17.09.2003
(51) Int. Cl.: H04L 12/28

(54) **Method for determining a transmission scheme for an MBMS service in a mobile communication system**

(30) Priority: 19.09.2002 KR 2002057182
(71) Applicant: SAMSUNG ELECTRONICS CO. LTD., Suwon-city, Kyungki-do (KR)
(72) Inventor: Kim, Soeng-Hun, c/o Samsung Electr.Co.Ltd., Suwon-city, Kyungki-do (JP); Kwak, Yong-Jun, c/o Samsung Electr.Co.Ltd., Suwon-city, Kyungki-do (JP); Choi, Sung-Ho, c/o Samsung Electr.Co.Ltd., Suwon-city, Kyungki-do (JP); Park, Joon-Goo, c/o Samsung Electr.Co.Ltd., Suwon-city, Kyungki-do (JP)
(74) Representative: Grünecker, Kinkeldey, Stockmair & Schwanhäusser Anwaltssozietät

(57) **Abstract**

A method for determining a transmission scheme for transmission of packet service data in a mobile communication system. The method detects the number of all user equipments (UEs) requesting the packet service data, located in a cell to which the UEs requesting the packet service data belong, and downlink transmission power used to provide the packet service in the cell, and determines a transmission scheme for the packet service data of the cell according to the detected number of the UEs and the detected downlink transmission power, thereby increasing efficiency of downlink transmission resources.

## Description

### BACKGROUND OF THE INVENTION

### 1. Field of the Invention

The present invention relates generally to a mobile communication system, and in particular, to a method for switching a transmission scheme for an MBMS (Multimedia Broadcast/Multicast Service) service according to total transmission power.

### 2. Description of the Related Art

Currently, duo to the development of communication industry, a service provided in a code division multiple access (CDMA) mobile communication system is developing into multicasting multimedia communication system for transmitting not only voice service data, but also high-capacity data such as packet data and circuit data. Therefore, in order to support the multicasting multimedia communication service, active research is being conducted on a broadcast/multicast service in which a service is provided from one data source to a plurality of user equipments (UEs). The broadcast/multicast service can be classified into a cell broadcast service (CBS), which is a message-centered service, and a multimedia broadcast/multicast service (MBMS) supporting multimedia data such as real-time image and voice, still image, and text.

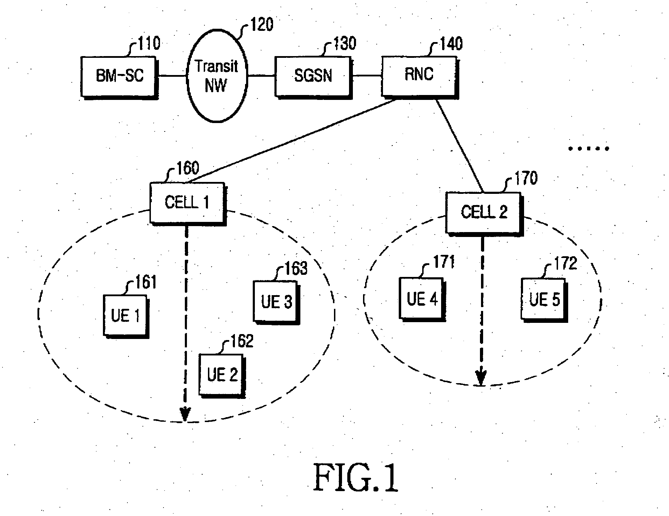

FIG. 1 schematically illustrates a network configuration for providing an MBMS service in a mobile communication system. Referring to FIG. 1, a Broadcast/Multicast- Service Center (BM-SC) 110 provides an MBMS stream for an MBMS service, schedules the stream, and delivers the scheduled MBMS stream to a transit network (N/W) 120. The transit network 120 is a network existing between the BM-SC 110 and a serving GPRS (General Packet Radio Service) support node (SGSN) 130, and delivers a stream for an MBMS service provided from the BM-SC 110 to the SGSN 130. It is assumed herein that the SGSN 130 can be comprised of a gateway GPRS support node (GGSN) and an external network. A plurality of UEs desiring to receive the MBMS service, e.g., a UE1 161, a UE2 162, and a UE3 163 each belonging to a Node B1 or cell#1 160, and a UE4 171 and a UE5 172 each belonging to a Node B2 or cell#2 170 exist at a particular time.

The SGSN 130, receiving a stream for an MBMS service from the transit network 120, controls an MBMS-related service of subscribers, or UEs, desiring to receive an MBMS service, i.e., controls an MBMS-related service including, for example, managing MBMS service accounting-related data of respective subscribers and selectively transmitting MBMS service data to a particular radio network controller (RNC) 140.

For the convenience of explanation, the term "Node B" and the term "cell" will be used herein with the same meaning. In addition, the Node B can manage either one cell or a plurality of cells.

The SGSN 130 must selectively transmit MBMS data to the RNC 140, and the RNC 140 must selectively transmit MBMS data to its corresponding cells. To this end, the SGSN 130 must have a list of RNCs receiving the MBMS service, and the RNC 140 must have a list of cells receiving the MBMS service. By doing so, the RNC 140 can provide an MBMS service to the cells, a list of which is stored therein.

The RNC 140 controls a plurality of cells, and transmits MBMS service data to a cell in which a UE requesting the MBMS service is located, among the cells managed by the RNC 140 itself. In addition, the SGSN 130 controls a radio channel set up to provide the MBMS service, and manages the MBMS service-related information with the stream for the MBMS service delivered from the SGSN 130.

As illustrated in FIG. 1, in order to provide an MBMS service, only one radio channel is set up between one Node B, e.g., the cell#2 170, and UEs 171 and 172 belonging to the cell#2 170. Though not illustrated in FIG. 1, a home location register (HLR) is connected to the SGSN 130, and performs subscriber authentication for an MBMS service.

In order to provide a particular MBMS service, fundamental information on the MBMS service must first be delivered to UEs, and when UEs receiving the fundamental information on the MBMS service desire to receive the particular MBMS service, a list of the UEs must be delivered to a network. When a network receives a list of UEs desiring to receive the particular MBMS service, the network must set up a radio bearer for paging the UEs and then providing the MBMS service to the UEs. After setting up a radio bearer to the UEs, the network provides the particular MBMS service over the set radio bearer. However, if the MBMS service is closed, the service close must be notified to all UEs. All the UEs then must release all resources that were assigned for the MBMS service, in order to enable a normal MBMS service.

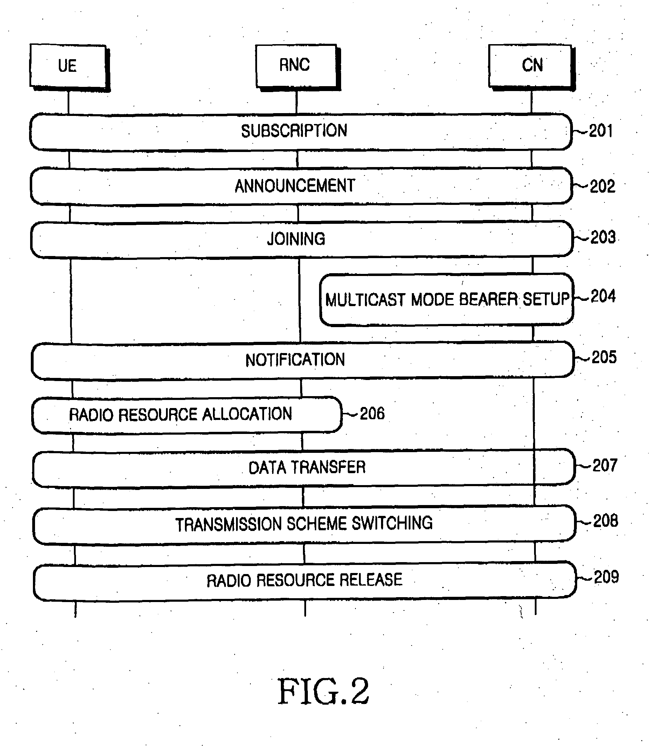

FIG. 2 illustrates a signaling procedure for providing an MBMS service in a mobile communication system. Referring to FIG. 2, a UE performs user subscription to a core network (CN) in order to receive a particular MBMS service (Step 201). The core network includes an BM-SC, a transit network and an SGSN, as illustrated in FIG. 1. In the user subscription process, fundamental information related to MBMS service accounting or MBMS service reception is exchanged between a service provider and a user. When the user subscription is completed, the core network performs a service announcement process in order to announce fundamental information on currently available MBMS services, e.g., menu information, to UEs or MBMS service subscribers (Step 202). The menu information represents time information at which a particular MBMS service is initiated, and duration information. The core network can either broadcast the menu information to predetermined service areas through a broadcast service such as CBS, or transmit the menu information only to the UEs from which an MBMS service request was received. In addition, the core network provides an MBMS service ID (Identifier) for distinguishing MBMS services through the menu information.

Upon receiving menu information through the service announcement process, the UE selects a desired MBMS service from the menu information, and performs a service joining process on the selected MBMS service to the core network (Step 203). The service joining request message transmitted from the UE to the core network includes an MBMS service ID indicating the selected MBMS service, and a UE ID indicating the corresponding UE. In response to the service joining request from the UE, the core network identifies the MBMS service desired by the UE, and sets up a multicast mode bearer to the UE (Step 204). In the multicast mode bearer setup process, a transport bearer for providing the MBMS service onto the core network, i.e., the SGSN and the transit network, can be previously set up. For example, a GTP-U/UDP/IP/L2/L1 bearer for the MBMS service may be previously set up between the SGSN and the GGSN. Thereafter, the core network performs a notification process, a kind of paging process, for notifying the UE that the requested MBMS service will be provided soon (Step 205).

UEs paged in the service notification process of the step 205 can transmit a service notification response message to the RNC, and the RNC determines the number of UEs located in each cell, using the service notification response message received from the UE. The number of UEs located in each cell can be used in determining a type, i.e., a transmission scheme, of a radio channel set up to provide an MBMS service to a corresponding cell. This feature will be described later on in more detail. A type of the transmission scheme is classified into a point-to-point (PTP) scheme and a point-to-multipoint (PTM) scheme, and these schemes will also be described later on.

When the UE is informed through the service notification process that the requested MBMS service will be initiated soon, the UE actually assigns a radio resource to provide the MBMS service through a radio resource allocation process with the core network, and realizes the assigned radio resource with actual hardware (Step 206). The radio resource allocation process is divided into a radio bearer setup step in which the RNC provides UEs located in a particular cell with information on a radio bearer over which the MBMS service will be transmitted in the corresponding cell, and a radio link setup step in which the RNC provides information on a transport bearer and a radio bearer to be formed on a Iub interface, to the cells where UEs scheduled to receive the MBMS service are located. When the radio resource allocation process is ended, all UEs requesting a particular MBMS service detect information related to a radio link through which the particular MBMS service will be provided, and information on an upper layer where the service will be handled, and the cells to which the UEs belong complete setting up of the radio link and the Iub interface.

When preparation for the MHMS service between the RNC and the UEs is completed, the core network performs an MBMS data transfer process in which MBMS service data is transmitted to the UEs via the RNC (Step 207). While MBMS service data is being transmitted to the UEs, (i) if a new UE requests the MBMS service, (ii) if particular UEs among the UEs receiving the MBMS service want to close the service, or (iii) if a UE receiving the MBMS service moves to a new cell, then the number of UEs located in a particular cell is changed. Here, a set of UEs that complete a service request process for a particular MBMS service and detect information on a radio channel over which the particular MBMS service is provided will be referred to as an "MBMS group." As the number of UEs located in the particular cell is increased or decreased, it may be a necessary to switch a type of a radio channel described in step 205, i.e., a transmission scheme in which the MBMS service is provided, and an RNC managing the corresponding cell performs a transmission scheme switching operation of switching a transmission scheme of the cell (Step 208). Thereafter, when transmission of the MBMS service data is completed, a radio resource release process for releasing radio resources, i.e., a transport bearer and a radio bearer, set up between the UE and the core network is performed (Step 209).

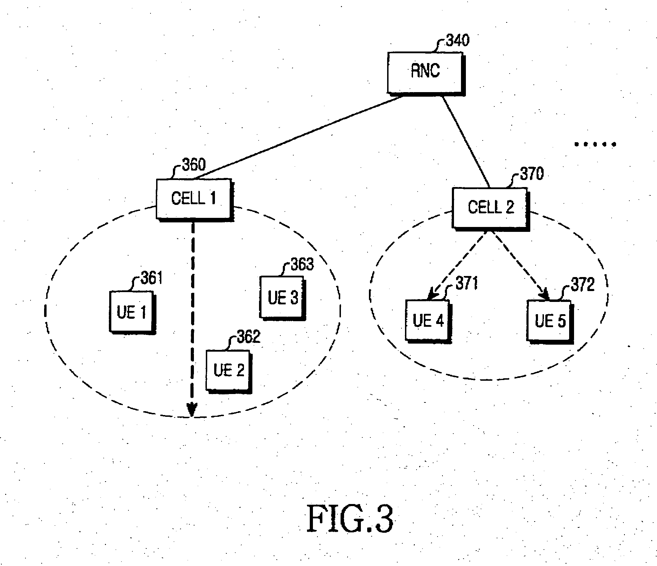

FIG. 3 schematically illustrates a PTP scheme and a PTM scheme, i.e., conventional transmission schemes, in a mobile communication system. Referring to FIG. 3, the PTM scheme is a transmission scheme in which data is transmitted up to the cell boundary as in a cell#1 360. In this transmission scheme, data is transmitted to all UEs requesting the data, over the same channel, and generally, the data is transmitted using a common channel. Unlike the PTM scheme, the PTP scheme is a transmission scheme in which data is separately transmitted to UEs requesting the data as in a cell#2 370, and generally, the data is transmitted using a dedicated channel. That is, for the MBMS service, one transmission resource, or channel, is shared by a plurality of UEs, in an attempt to efficiently utilize transmission resources. However, the efficient use of transmission resources is accomplished when a plurality of UEs are located in a particular one cell (in the following description, the term "UE" refers to only a UE receiving one MBMS service), and if a small number of UEs are located in one cell, the transmission resources may be inefficiently used.

For example, when a particular MBMS service is served in the PTM scheme, i.e., served using a common channel, a transmission signal is transmitted at high transmission power so that it can arrive at up to the cell boundary, in the light of a characteristic of the common channel, thus wasting transmission power resources. That is, if transmission power required to provide the MBMS service. over the common channel is 10dBm and the total transmission power required to provide the MBMS service using dedicated channels is 5dBm, providing the MBMS service using the dedicated channels rather than the common channel results in an increase in efficiency of transmission resources. The PTP scheme is more efficient than the PTM scheme when all UEs receiving MBMS data are located in a place being comparatively adjacent to a Node B, so transmission power required for a dedicated channel assigned to each of the UEs is low. As a result, the total transmission power required for the dedicated channels becomes lower than transmission power needed for the common channel.

Parameters for determining relative efficiency of the PTP scheme and the PTM scheme include positions of UEs, which are located in a corresponding cell, requesting or receiving MBMS data and the number of the UEs. However, because it is almost impossible to measure positions of the UEs on a real-time basis in an actual radio channel environment, there is a demand for a method of determining a transmission scheme in which an MBMS service is to be provided to a corresponding cell, by considering only the number of UEs. In this case, the number of UEs is experimentally calculated, which increases efficiency of transmission resources when the PTP scheme is used rather than the PTM scheme in providing the MBMS service, and the calculated number of UEs is designated as a threshold. When the number of UEs located in a particular cell is larger than or equal to the threshold, an MBMS service is provided in the PTM scheme. In contrast, if the number of UEs located in the particular cell is smaller than the threshold, the MBMS service is provided in the PTP scheme.

A method for detennining a transmission scheme for an MBMS service depending on the number of UEs located in a particular cell will be described herein below with reference to FIG. 3. It is assumed in FIG. 3 that the threshold is set to 3.

Because 3 UEs, i.e., UE1 361 to UE3 363, are located in the cell#1 360, the cetl#1 360 provides an MBMS service in the PTM scheme. However, because 2 UEs, i.e., UE4 371 and UE5 372 are located in the cell#2 370, the cell#2 370 provides an MBMS service in the PTP scheme. Here, a transmission scheme of each cell for providing the MBMS service is determined by an RNC 340 depending on the number of UEs located in each cell. That is, if the number of UEs located in a corresponding cell is larger than or equal to the threshold, the PTM scheme is selected as a transmission scheme. In contrast, if the number of UEs located in a corresponding cell is smaller than the threshold, the PTP scheme is determined as a transmission scheme. However, if a new UE enters the cell#2 370 at a particular time, since the number of UEs located in the cell#2 370 becomes 3, which is equal to the threshold, the transmission scheme of the cell#2 370 is switched to the PTM scheme.

However, as described above, when the transmission scheme for an MBMS service is determined considering only the number of UEs located in a particular cell, efficiency of transmission resource may be reduced. For example, when the UES 372, which is located in the cell#2 370, moves to a cell boundary of the cell#2 370, transmission power consumed to provide an MBMS service over a dedicated channel assigned to the UES 372 is almost equal to transmission power consumed when transmitting MBMS data in the PTM scheme. Therefore, determining a transmission scheme according to the number of UEs may reduce efficiency of transmission resources undesirably.

### SUMMARY OF THE INVENTION

It is, therefore, an object of the present invention to provide a method for switching a transmission scheme for an MBMS service in a mobile communication system.

It is another object of the present invention to provide a method for switching a transmission scheme for an MBMS service according to transmission power in a mobile communication system.

In accordance with a first aspect of the present invention, there is provided a method for switching a type of a transmission scheme to a point-to-multipoint (PTM) scheme, by a Node B, which provides an MBMS (Multimedia Broadcast/Multicast Service) service to a user equipment (UE) in a point-to-point (PTP) scheme as the transmission scheme, in a mobile communication, system including at least one UE located in a particular cell, the at least one UE receiving the MBMS service via the cell, and a radio network controller (RNC) providing the MBMS service to the at least one UE via the cell, the mobile communication system determining a type of the transmission scheme according to a number of the at least one UE receiving the MBMS service within the cell. The method comprises the steps of: receiving, by the at least one UE, a measurement command from the RNC; upon receiving the measurement command, measuring, by the at least one UE, total transmission power of a dedicated channel providing the MBMS service, for the cell; and receiving, by the at least one UE, a power threshold and a waiting time provided from the RNC before receiving the measurement command, and sending a request for switching the transmission scheme to the RNC, if a situation in which the measured total transmission power exceeds the power threshold continues for the waiting time.

In accordance with a second aspect of the present invention, there is provided a method for switching a type of a transmission scheme to a point-to-multipoint (PTM) scheme, by a radio network controller (RNC), which provides an MBMS (Multimedia Broadcast/Multicast Service) service to at least one user equipment (UE) in the PTP scheme as the transmission scheme, in a mobile communication system including the at least one UE located in a cell existing in a particular Node B, the at least one UE receiving the MBMS service via the cell, and the RNC providing the MBMS service to the at least one UE via the Node B, the mobile communication system determining a type of the transmission scheme by a number of the at least one UE receiving the MBMS service within the cell. The method comprises the steps of: providing, by the RNC, a power threshold and a waiting time to the Node B, and issuing a command to measure total transmission power of a dedicated channel providing the MBMS service in the cell; receiving, by the RNC, a report on the measurement result from the Node B in which the total transmission power measured in response to the measurement command exceeds the power threshold for the waiting time; and switching, by the RNC, a type of the transmission scheme to the PTM scheme upon receiving the report on the measurement result.

In accordance with a third aspect of the present invention, there is provided a method for switching a transmission scheme for providing an MBMS (Multimedia Broadcast/Multicast Service) service to a cell from a point-to-point (PTP) scheme to a point-to-multipoint (PTM) scheme, in a mobile communication system including at least one user equipment (UE) located in the cell, which is located in a Node B, the at least one UE receiving the MBMS service via the cell, and a radio network controller (RNC) providing the MBMS service to the at least one UE via the Node B, the mobile communication system determining a type of the transmission scheme by a number of the at least one UE receiving the MBMS service within the cell. The method comprises the steps of: providing, by the RNC, a power threshold and a waiting time to the Node B, and issuing a command to measure total transmission power of a dedicated channel providing the MBMS service in the cell; upon receiving the measurement command, measuring, by the Node B, total transmission power of a dedicated channel providing the MBMS service for the cell, and transmitting a report on the measurement result to the RNC, if the measured total transmission power exceeds the power threshold for the waiting time; and switching, by the RNC, the type of the transmission scheme to the PTM scheme based on the report on the measurement result.

In accordance with a fourth aspect of the present invention, there is provided a method for switching a type of a transmission scheme to a point-to-multipoint (PTM) scheme, by a radio network controller (RNC), which provides an MBMS (Multimedia Broadcast/Multicast Service) service to at least one user equipment (UE) in a point-to-point (PTP) scheme as the transmission scheme, in a mobile communication system including the at least one UE located in a cell in a Node B, the at least one UE receiving the MBMS service via the, cell, and the RNC providing the MBMS service to the at least one UE via the Node B, the mobile communication system determining the type of the transmission scheme according to a number of the at least one UE receiving the MBMS service within the cell. The method comprises the steps of: transmitting, from the RNC to the Node B, a command to measure total transmission power of a dedicated channel providing the MBMS service in the cell; receiving, by the RNC, a report on the total transmission power measured in response to the measurement command; and switching, by the RNC, the type of the transmission scheme to the PTM scheme, if the reported total transmission power exceeds a predetermined power threshold for a predetermined waiting time.

### BRIEF DESCRIPTION OF THE DRAWINGS

The above and other objects, features, and advantages of the present invention will become more apparent from the following detailed description when taken in conjunction with the accompanying drawings in which:
FIG. 1 schematically illustrates a network configuration for providing an MBMS service in a mobile communication system;
FIG. 2 illustrates a signaling procedure for providing an MBMS service in a mobile communication system;
FIG. 3 schematically illustrates a PTP scheme and a PTM scheme, i.e., conventional transmission schemes, in a mobile communication system;
FIG. 4 schematically illustrates a transmission scheme determining procedure for providing an MBMS service according to an embodiment of the present invention;
FIG. 5A schematically illustrates a state transition process in a downlink transmission power reporting procedure according to an embodiment of the present invention;
FIG. 5B schematically illustrates a state transition process based on the transmission scheme determining procedure according to an embodiment of the present invention;
FIGs. 6A and 6B illustrate a procedure for switching a transmission scheme from a PTP scheme to a PTM scheme according to an embodiment of the present invention;
FIG. 7 illustrates a procedure for switching a transmission scheme from a PTM scheme to a PTP scheme according to an embodiment of the present invention;
FIGs. 8A to 8D schematically illustrate message formats of messages newly proposed according to an embodiment of the present invention; FIG. 9 is a flowchart illustrating an operation of an RNC according to an embodiment of the present invention; and
FIG. 10 is a flowchart illustrating an operation of a Node B according to an embodiment of the present invention.

### DETAILED DESCRIPTION OF THE PREFERRED EMBODIMENT

Preferred embodiments of the present invention will now be described in detail with reference to the annexed drawings. In the following description, a detailed description of known functions and configurations incorporated herein has been omitted for conciseness.

The invention first considers the number of user equipments (UEs) located in a particular cell, as described in the background technology section, in determining a transmission scheme for a multimedia broadcast/multicast service (MBMS). That is, in the present invention, if the number of UEs located in a particular cell is larger than or equal to a preset threshold, an MBMS service is provided in a point-to-multipoint (PTM) scheme. However, if the number of UEs located in a particular cell is smaller than the threshold, an MBMS service is provided in a point-to-point (PTP) scheme. In addition, the present invention determines a transmission scheme with 2 thresholds of a PTP/PTM threshold and a PTM/PTP threshold.

As indicated above, the present invention first selects a PTP scheme or a PTM scheme as a transmission scheme depending on the number of UEs desiring to receive MBMS data, located in a corresponding cell. Thereafter, however, in the present invention, a PTP scheme or a PTM scheme is selected depending on not only the number of UEs but also total transmission power (or a total transmitted code power) of a radio channel for transmitting MBMS data. The total transmitted code power is measured in a Node B, and a measurement start point and end point for the total transmitted code power are notified to the Node B by a radio network controller (RNC) using new NBAP (Node B Application Part) messages, called an MBMS Measurement Initiation Request message and an MBMS Measurement Delete message. In addition, a measurement object for total transmitted code power is also notified to the Node B by the RNC through the MBMS Measurement Initiation Request message.

The Node B then reports measured total transmitted code power to the RNC, using a new NBAP message called an MBMS Measurement Report message. A time when the Node B reports the total transmitted code power to the RNC is determined by a downlink transmission power reporting algorithm (DL_Po Reporting Algorithm) realized in the Node B. The DL_Po Reporting Algorithm is controlled by an MBMS Measurement Initiation Request message transmitted from the RNC to the Node B.

Consequently, the RNC can determine a transmission scheme for providing an MBMS service based on total transmitted code power reported by the Node B, and this is performed by a transmission scheme switching algorithm realized in the RNC. Therefore, when the RNC determines to switch a transmission scheme, it must notify the determined transmission scheme to a Node B and the UEs. A notification message for the transmission scheme includes a channel and various parameters based on the determined transmission scheme.

Conventionally, the transmission scheme switching algorithm considers only the number of UEs located in a corresponding cell. However, in the present invention, the transmission scheme switching algorithm considers the number of UEs and also the total transmitted code power that a Node B reports to an RNC through an MBMS Measurement Report message. That is, in order to determine a transmission scheme for a particular cell, the RNC considers the number of UEs located in the particular cell and also total transmitted code power reported by the Node B at a particular time. When the determined transmission scheme is different from a previously determined transmission scheme, the RNC performs a series of procedures for switching the transmission scheme together with the Node B and the UEs.

The transmission scheme switching algorithm can be realized in various methods. For example, the transmission scheme switching algorithm is realized so as to set a particular threshold and then switch a transmission scheme of a Node B from a PTP scheme to a PTM scheme, if total transmitted code power reported by the Node B is higher than or equal to the threshold. As another example, when a Node B periodically reports total transmitted code power to an RNC, the RNC determines whether to switch a transmission scheme, depending on the periodically reported total transmitted code power. Of course, the transmission scheme switching algorithm can be freely modified in addition to the above examples.

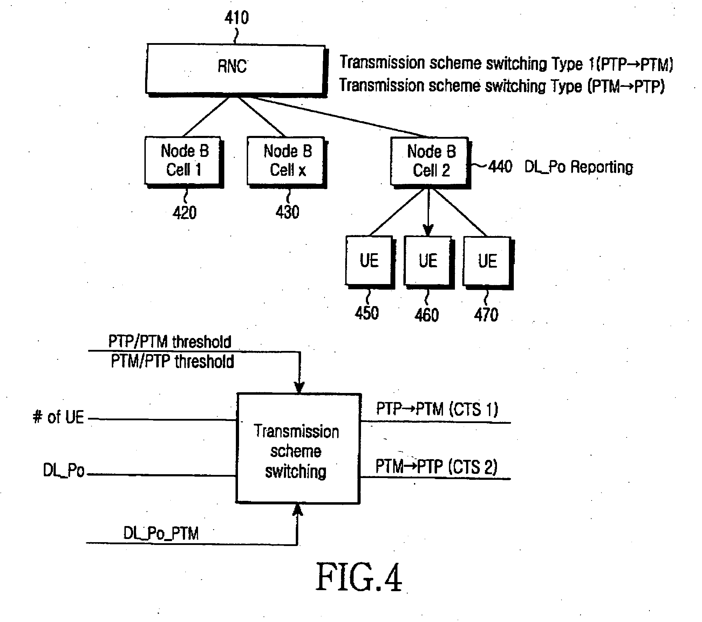

FIG. 4 schematically illustrates a transmission scheme determining procedure for providing an MBMS service according to an embodiment of the present invention. In the following description, the term "Node B" and the term "cell" are used in with same meaning, for convenience.

Referring to FIG. 4, a cell#1 420, a cell#2 440, and a cell#x 430 perform downlink power reporting under the control of an RNC 410. The present invention performs the downlink power report operation only when a PTP scheme is used as a transmission scheme for providing an MBMS service in a corresponding cell. That is, a corresponding cell transmits an MBMS Measurement Report message to the RNC 410 when a total transmitted code power of channels used in a PTP scheme in which a corresponding Node B transmits an MBMS service, e.g., dedicated channels for transmitting MBMS data, is higher than a preset threshold, i.e., DL_Po_PTM threshold.

The RNC 410 determines a PTP/PTM threshold, a PTM/PTP threshold, and a DL_Po_PTM threshold, for an MBMS service. Although a procedure for determining the thresholds is not directly related to the invention, it will be described in brief. In addition, the invention will be described with reference to only the case where the RNC 410 determines a transmission scheme for one MBMS service. Of course, it is also possible to determine a transmission scheme by considering all available MBMS services.

The PTP/PTM threshold is a threshold for the number of UEs, applied to switch a transmission scheme from a PTP scheme to a PTM scheme, and the PTM/PTP threshold is a threshold for the number of UEs, applied to switch a transmission scheme from the PTM scheme to the PTP scheme. The PTP/PTM threshold and PTM/PTP threshold are used when the RNC 410 first determines a transmission scheme to provide an MBMS service. The PTP/PTM threshold and PTM/PTP threshold are previously given to a system after being determined through system simulation or field test. The reason for using 2 thresholds of the PTP/PTM threshold and the PTM/PTP threshold as thresholds for the number of UEs for determining a transmission scheme is to avoid frequent transmission scheme switching which may occur when the number of UEs is changed at around the threshold.

A DL_Po_PTM threshold is transmission power (transmitted code power) consumed when a particular MBMS service is provided in a PTM scheme, i.e., when a particular MBMS service is provided using a radio channel, e.g., a common channel, capable of transmitting the MBMS service up to the cell boundary. The transmitted code power is determined by a type of the MBMS service, a transfer rate, and a required quality of service (QoS).

The RNC 410 determines a transmission scheme of a corresponding cell using the determined transmission scheme-related parameters, i.e., PTP/PTM threshold, PTM/PTP threshold, and DL_Po_PTM threshold. The RNC 410 determines an MBMS data transmission scheme for a corresponding cell by detecting the number of UEs receiving an MBMS service at a particular time according to cells. That is, after checking the number of UEs located in each cell through the service notification process in step 205 of FIG. 2, the RNC 410 can continuously detect the number of UEs receiving the corresponding MBMS service. For example, when a UE receiving the MBMS service moves from its original cell to a new cell, the UE transmits a Cell Update message to the RNC 410, and upon receiving the Cell Update message, the RNC 410 updates the number of UEs in each cell. The RNC 410 determines a transmission scheme depending on transmitted code power consumed by a Node B for an MBMS service. The RNC 410 receives the transmitted code power through an MBMS Measurement Report message transmitted by the Node B, and determines a transmission scheme depending on the transmitted code power.

Additionally, FIG. 4 illustrates the parameters for determining a transmission scheme and an input/output relation based on the parameters. As illustrated in FIG. 4, the parameters for determining a transmission scheme include PTP/PTM threshold, PTM/PTP threshold, DL_Po_PTM threshold, and transmitted code power, and the RNC 410 determines a transmission scheme using the parameters of PTP/PTM threshold, PTM/PTP threshold, DL_Po_PTM threshold and transmitted code power. In determining a transmission scheme, the invention considers whether the transmitted code power exceeds the DL_Po_PTM threshold, rather than directly using the transmitted code power.

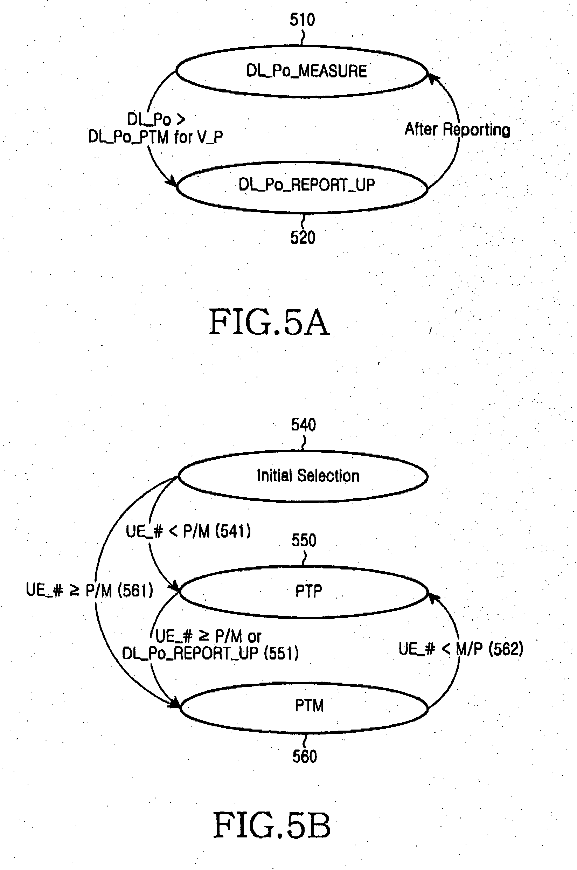

FIG. 5A schematically illustrates a state transition process in a downlink transmission power (DL_Po) reporting procedure according to an embodiment of the present invention. Referring to FIG. 5A, the DL_Po reporting procedure is performed in a Node B, and the Node B receives DL_Po_PTM and V_P from an RNC through an MBMS Measurement Control message. The DL_Po_PTM, as described above, is downlink transmission power consumed when an MBMS service is provided in a PTM scheme, and its unit can be set to dBm. The V_P represents a waiting time needed before the Node B transmits an MBMS Measurement Report message to the RNC, and its unit can be set to 10msec. Here, the V_P is a waiting time for which a state in which the DL_Po exceeded the DL_Po_PTM must continue, and before transmitting an MBMS Measurement Report message to the RNC, the Node B must maintain its state for the waiting time V_P after the DL_Po exceeded the DL_Po_PTM.

Herein below, the terminologies to be used in describing FIGs. 5A and 5B will be described.
(1) DL_Po: is the sum of downlink (DL) transmission power used to provide an MBMS service by a particular cell at a particular time. If n radio links (RLs), i.e., n RLs of RL_1 to RL_n, are set up in the particular cell and downlink transmission power used for a particular RL_x is defined as DL_Po_RL_x, then DL_Po = DL_Po_RL_1+,...,+DL_Po_RL_n. Here, each of the radio links for the MBMS service represents a dedicated channel. Therefore, in this case, a transmission scheme is a PTP scheme.
(2) Downlink transmission power report (DL_Po_REPORT_UP) state: is a state in which when DL_Po exceeds DL_Po_PTM and then this state continues for V_P, a Node B reports this fact to an RNC. In the DL_Po_REPORT_UP state, the Node B reports to the RNC, through an MBMS Measurement Report' message, that DL_Po exceeded DL_Po_PTM and that this state has continued for V_P.

When first receiving an MBMS Measurement Initiation Request message including such parameters as DL_Po_PTM threshold and V_P from the RNC, the Node B transitions to a downlink transmission power measurement (DL_Po_MEASURE) state 510. In the DL_Po_MEASURE state 510, the Node B continuously measures DL_Po for an MBMS service, consumed by the Node B itself. During the continuous measurement of DL_Po, if a state where DL_Po is higher than DL_Po_PTM continues for V_P, the Node B transitions to a DL_Po_REPORT_UP state 520, and then transmits an MBMS Measurement Report message to the RNC. After completion of transmitting the MBMS Measurement Report message, the Node B transitions back to the DL_Po_MEASURE state 510.

FIG. 5B schematically illustrates a state transition process based on the transmission scheme determining procedure according to an embodiment of the present invention. Referring to FIG. 5B, the transmission scheme determining procedure is performed in an RNC, and the RNC determines a transmission scheme for an MBMS service according to cells. That is, if a particular RNC manages x cells for a particular MBMS service, the transmission scheme determining procedure is performed x times for each cell. If the radio resource allocation process for a particular MBMS service is completed in step 206 of FIG. 2, an MBMS data transmission scheme determining procedure of a corresponding cell becomes an initial selection state 540. In the initial selection state 540, if the number UE_# of UEs located in the corresponding cell is smaller than a PTP/PTM threshold (abbreviated to "P/M" in FIG. 5B), the RNC determines a PTP scheme as a transmission scheme for the corresponding cell, and thus transitions from the initial selection state 540 to a PTP state 550 (Step 541).

However, in the initial selection state 540, if the number UE_# of UEs located in the corresponding cell is larger than or equal to a PTP/PTM threshold, the RNC determines a PTM scheme as a transmission scheme for the corresponding cell, and thus transitions from the initial selection state 540 to a PTM state 560 (Step 561). If UE_# of a corresponding cell is changed from a number smaller than PTP/PTM to a number larger than or equal to PTP/PTM at a particular time, the state transitions from the PTP state 550 to the PTM state 560 (Step 551). In addition, if a DL_Po_REPORT_UP event occurs at a particular time, i.e., if a Node B reports to an RNC, through an MBMS Measurement Report message, the fact that downlink transmission power consumed for a corresponding MBMS service exceeded DL_Po_PTM and this state has continued for V_P, then the corresponding cell transitions from the PTP state 550 to the PTM state 560 (Step 551). Further, if UE_# becomes smaller than a PTM/PTP threshold (M/P) while the corresponding cell is in the PTM state 560, then the corresponding cell transitions back to the PTP state 550 (Step 562).

As a result, if it is reported that the number of UEs located in a particular cell exceeds a PTP/PTM threshold or DL_Po from a Node B is higher than DL_Po_PTM, then the RNC transitions to a PTM state to delete dedicated channels currently set up for the PTP scheme, and sets up a common channel for the PTM scheme to provide an MBMS service. In addition, if the number of UBs becomes smaller than a PTM/PTP threshold while an MBMS service is being provided to a particular cell in a PTM scheme, the RNC deletes a common channel for the PTM scheme and sets up dedicated channels for the'PTP scheme to provide an MBMS service.

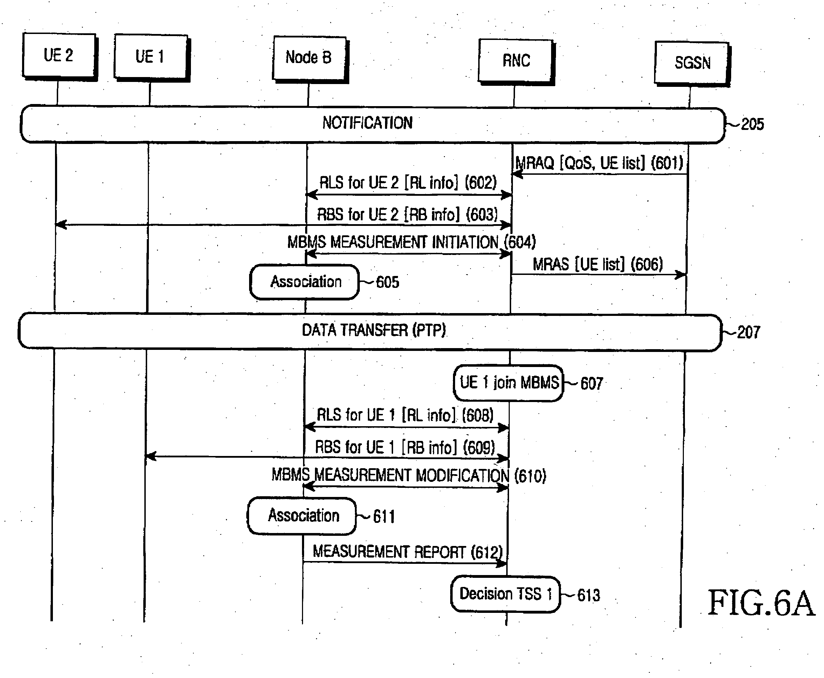

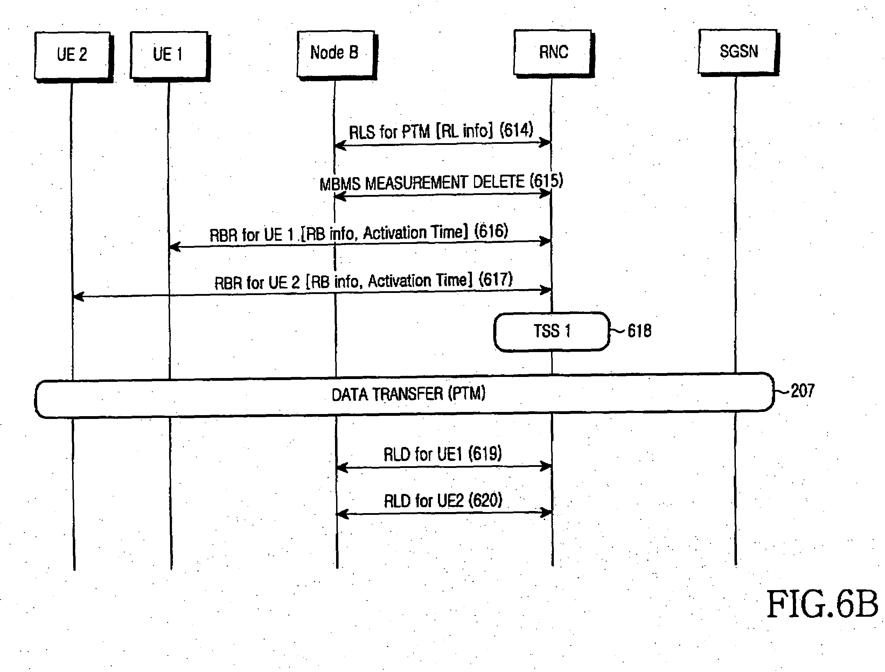

FIGs. 6A and 6B illustrate a procedure for switching a transmission scheme from a PTP scheme to a PTM scheme according to an embodiment of the present invention. Referring to FIGs. 6A and 6B, the MBMS service providing process of the invention is identical to the process in the steps 201 to 205 of FIG. 2, so a detailed description thereof will be omitted for simplicity. It will be assumed that as UEs paged through the service notification process in step 205 transmitted a service notification response message to a network, an SGSN has secured a list of UEs desiring to receive a corresponding MBMS service. Abbreviations to be used in describing FIGs. 6A and 6B are defined as follows.
(1) MRAQ: MBMS RAB (Radio Access Bearer) Assignment Request
(2) MRAS: MBMS RAB Assignment Response
(3) RLS: Radio Link Setup
(4) RBS: Radio Bearer Setup
(5) RBR: Radio Bearer Reconfiguration
(6) RLD: Radio Link Delete
(7) RBD: Radio Bearer Delete
(8) TSS 1: Transmission Scheme Switching type 1
(9) TSS 2: Transmission Scheme Switching Type 2

After completing the service notification process in step 205, an SGSN transmits an MRAQ message to an RNC (Step 601). Although the SGSN can transmit the MRAQ message to several RNCs, FIG. 6A illustrates an example where the SGSN transmits the MRAQ message to only one RNC, for the convenience of explanation. The MRAQ message includes such parameters as QoS information to be applied to an MBMS service, and a list of UEs expected to receive the MBMS service. The RNC determines a radio resource to be applied to the MBMS service, using the QoS information in the received MRAQ message, and determines a transmission scheme to be set for respective cells, using the UE list. Although the RNC controls a plurality of cells, it is assumed in FIGs. 6A and 6B that the RNC controls only one cell, for the convenience of explanation. In addition, it will be assumed that a PTP/PTM threshold for the MBMS service is 3 and only a UE2 is located in the cell, or Node B. The RNC then transitions from the initial selection state 540 to the PTP state 550 in the transmission scheme determining procedure as described in conjunction with FIG. 5B, a PTP scheme is selected as a transmission scheme of the Node B.

Accordingly, the RNC, together with the Node B, performs an RLS process of setting up a dedicated channel for supporting the PTP scheme (Step 602). In the RLS process, a Radio Link Setup Request message and a Radio Link Setup Response message are exchanged. The Radio Link Setup Request message includes a control RNC (CRNC) communication context ID (CRCC ID) serving as an identifier for identifying a particular UE by the RNC, a radio link ID (RL ID) of the dedicated channel, and various parameters necessary for setting up the dedicated channel, i.e., layer 2 (L2) information and layer 1 (L1) information. For example, channelization code information to be applied to the dedicated channel, transmission power control-related information, and transport format information are included in the Radio Link Setup Request message. The Radio Link Setup Response message includes a Node B communication context ID (NBCC ID) serving as an identifier for identifying the UE by the Node B, and information indicating whether a radio link identified by the RL ID is successfully set up.

After completion of the RLS process together with the Node B, the RNC designates a particular UE for the Node B, using the NBCC ID, and the Node B designates a particular UE for the RNC, using the CRCC ID. In addition, the RNC, together with a UE2, performs an RBS process of setting up a dedicated channel for supporting the PTP scheme (Step 603). In the RBS process, a Radio Bearer Setup message and a Radio Bearer Setup Complete message are exchanged. The Radio Bearer Setup message includes various parameters necessary for setting up the dedicated channel, for example, channelization code information to be used for the dedicated channel, transmission power control-related information, transport format information, radio link control (RLC)-related information, and packet data convergence protocol (PDCP)-related information. The Radio Bearer Setup Complete message includes information indicating whether a dedicated channel based on the Radio Bearer Setup message is successfully set up.

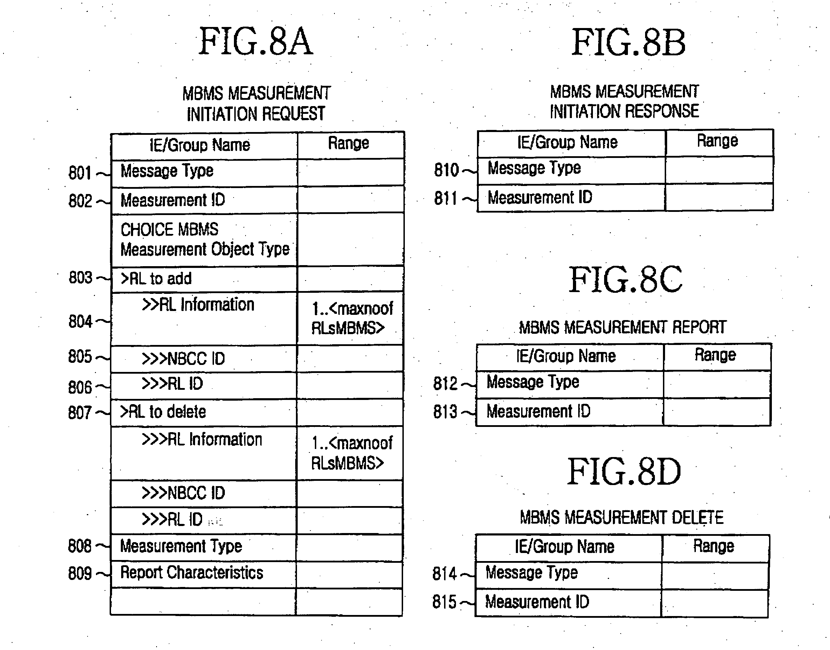

If the procedure is completed up to the RBS process, it means that preparation for providing an MBMS service to the UE2 over the dedicated channel in the PTP scheme is completed. Thereafter, the RNC, together with the Node B, perform an MBMS measurement initiation process (Step 604). In the MBMS measurement initiation process, an MBMS Measurement Initiation Request message and an MBMS Measurement Initiation Response message are exchanged. Message formats of the MBMS Measurement Initiation Request message and the MBMS Measurement Initiation Response message are illustrated in FIGs. 8A and 8B, respectively.

FIGs. 8A and 8B schematically illustrate message formats of messages newly proposed according to an embodiment of the present invention. Referring to FIGs. 8A and 8B, NBCC ID and RL ID of a UE2 to which a dedicated channel for the PTP scheme is set up are written in the MBMS Measurement Initiation Request message transmitted from an RNC to a Node B in order to receive an MBMS service at a particular time, and V_P and DL_Po_PTM threshold are written in a Reporting Characteristics IE 809, as illustrated in FIG. 8A. Upon receiving the MBMS Measurement Initiation Request message, the Node B starts measuring transmitted code power of a dedicated channel, or a radio link, for the UE2, and transmits the measured transmitted code power of the UE2 to the RNC through the MBMS Measurement Initiation Response message of FIG. 8B.

When the MBMS measurement initiation process is completed, the Node B performs an association process (Step 605). In the association process, the NBCC ID and RL ID are associated with a Measurement ID. That is, because each of dedicated channels assigned according to the PTP transmission scheme needs to be subject to measurement for transmitted code power, a process of associating one Measurement ID to the NBCC ID and RL ID is required, and this process is called an association process. In addition, the RNC transmits an MRAS message to the SGSN as a response to the MRAQ message (Step 606), and upon receiving the MRAS message, the SGSN performs an MBMS data transfer process in the PTP scheme (Step 207).

If a particular UE, e.g., a UE1, enters the Node B while an MBMS service is being provided in the PTP scheme, and performs a join process for the MBMS service (Step 607), the RNC detects the number of UEs in the Node B in response to a service request from the UE1, and because the number of UEs is smaller than 3 which is a preset PTP/PTM threshold, the RNC continuously provides the MBMS service in the PTP scheme for the Node B. Therefore, the RNC, together with the Node B, performs an RLS process (Step 608) and an RBS process for the UE (Step 609.). Because the RLS process and RBS process for the UE1 are equal to the RLS process and RBS process for the UE2, a detailed description thereof will be omitted herein. If the RBS process for the UE2 is completed in this way, the RNC performs an MBMS measurement modification process (Step 610).

In the MBMS measurement modification process, an MBMS Measurement Initiation Request message and an MBMS Measurement Initiation Response message for the MBMS measurement initiation process described in step 604 are used. That is, because even transmitted code power of the UE1 must be included in the measurement, the RNC transmits the MBMS Measurement Initiation Request message to the Node B after writing NBCC ID and RL ID for the UE1 in a NBCC ID 805 and a RL ID 806 of the MHMS Measurement Initiation Request message, respectively The Node B then transmits an MBMS Measurement Initiation Response message to the RNC, and performs an association process of associating a Measurement ID with NBCC ID/RL ID for the UE1 (Step 611). Therefore, after the association process of step 611 is performed, NBCC IDIRL ID for the UE1 and NBCC ID/RL ID for UE2 are associated to the Measurement ID, and the Node B measures transmitted code power of dedicated channels assigned to the UEs, and then stores the measured values as total transmitted code power, i.e., DL_Po. If the DL_Po exceeds a preset DL_Po_PTM threshold, the Node B activates a timer included therein, and when the timer completely counts a preset V_P, the Node B transmits an MBMS Measurement Report message to the RNC (Step 612). The timer is activated when the total transmitted code power, or DL_Po, exceeds a DL_Po_PTM threshold, and the timer is reset when the DL_Po is lower than the DL_Po_PTM threshold.

Upon receiving the MBMS Measurement Report message from the Node B, the RNC recognizes that the total transmitted code power of dedicated channels currently set up to provide an MBMS service exceeds the DL_Po_PTM threshold, and accordingly, determines to switch a transmission scheme for the MBMS service from a PTP scheme to a PTM scheme, i.e., determines TSS 1 (Step 613). In the RLS process, a Radio Link Setup Request message and a Radio Link Setup Response message are exchanged (Step 614). The Radio Link Setup Request message includes physical layer information to be used for allocation of a common channel for the PTM scheme, and transport format set (TFS) information. Thereafter, the RNC transmits an MBMS Measurement Delete message to the Node B in order to delete an MBMS measurement operation previously created according to the PTP scheme (Step 615).

Upon receiving the MBMS Measurement Delete message from the RNC, the Node B releases measurement for NBCC ID/RL ID indicating a Measurement ID. That is, the Node B releases transmitted code power measurement of radio links associated with the Measurement ID, i.e., dedicated channels. Thereafter, the RNC performs an RBR process together with the UE1 and UE2 (Steps 616 and 617). In the RBR process, the RNC transmits a Radio Bearer Reconfiguration (RBR) message to the UE1 and UE2, and in the RBR message, radio bearer information to be applied to a common channel for the PTM scheme and an activation time at which the common channel is to be applied are written. Upon receiving the RBR message, the UE1 and UE2 complete preparation for reconfiguring a transceiver as indicated by the RBR message, and then transmit a Radio Bearer Reconfiguration Complete message to the RNC. Upon receiving the Radio Bearer Reconfiguration Complete message from the UE1 and UE2, the RNC suspends transmission of MBMS data transmission over dedicated channels for the PTP scheme at the activation time, and performs MBMS data transmission over a common channel assigned according to the PTM scheme (Steps 618 and 207).

The RNC performs an RLD process together with the UE1 and UE2 in order to delete the currently allocated dedicated channels for the UE1 and UE2 (Steps 619 and 620). In the RLD process, a Radio Link Delete Request message and a Radio Link Delete Response message are exchanged.

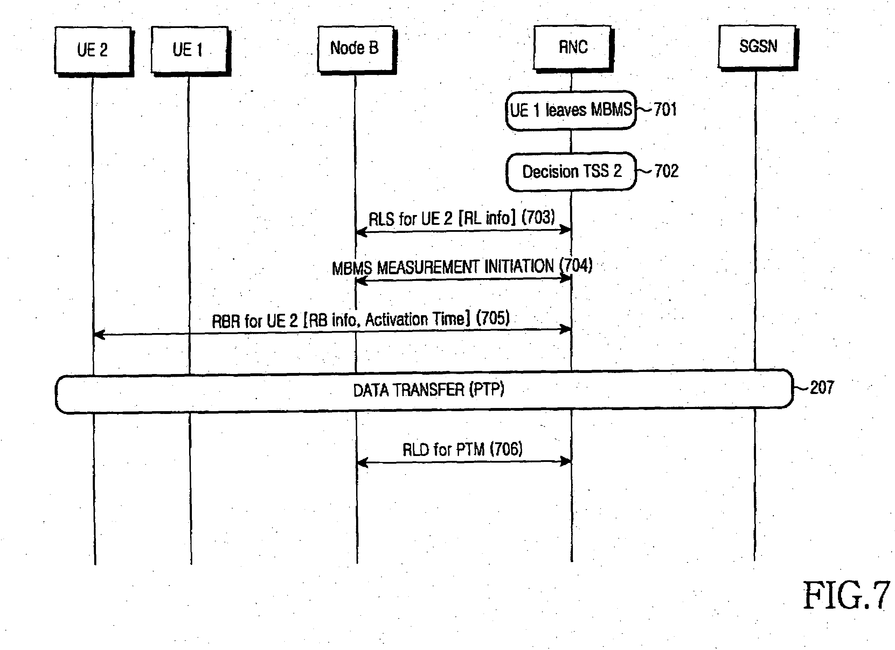

A procedure for switching a transmission scheme while providing an MBMS service in a PTP scheme so as to provide the MBMS service in a PTM scheme has been described so far with reference to FIGs. 6A and 6B. Next, a procedure for switching a transmission scheme while providing an MBMS service in a PTM scheme so as to provide the MBMS service in a PTP scheme will be described with reference to FIG. 7.

FIG. 7 illustrates a procedure for switching a transmission scheme from a 5 PTM scheme to a PTP scheme according to an embodiment of the present invention. Referring to FIG. 7, a UE1 suspends reception of an MBMS service while the UE1 and a UE2 are receiving the MBMS service (Step 701). When a particular UE suspends reception of a particular MBMS service from a particular cell, this fact is informed to an RNC that manages the cell through a cell update process, or informed to the RNC through notification by an SGSN. If a PTM/PTP threshold is 2 in FIG. 7, the RNC determines whether to provide an MBMS service in a PTP scheme for the cell, i.e., determines TSS 2 (Step 702). Then the RNC, together with the Node B, performs an RLS process of assigning a dedicated channel for a PTP scheme (Step 703). In the RLS process, a Radio Link Setup Request message and a Radio Link Setup Response message are exchanged. Because the RLS process is the same as the RLS process described in steps 602 and 608 of FIG. 6A, a detailed description thereof will be omitted.

Thereafter, the RNC performs an MBMS measurement initiation process together with the Node B (Step 704). In the MBMS measurement initiation process, an MBMS Measurement Initiation Request message and an MBMS Measurement Initiation Response message are exchanged, and the Node B begins measurement of transmitted code power for the dedicated channel set up in step 703. Also, the MBMS measurement initiation process is identical to the MBMS measurement initiation process described in conjunction with FIG. 6A, so a detailed description thereof will be omitted herein.

Thereafter, the RNC performs an RBR process together with the UE2 (Step 705). In the RBR process, a Radio Bearer Reconfiguration message and a Radio Bearer Reconfiguration Complete message are exchanged, and because the RBR process is also identical to the RBR process described in conjunction with FIG. 6A, a detailed description thereof will be omitted. Thereafter, the RNC transmits MBMS data to the UE2 at the activation time over a dedicated channel for the PTP scheme. In addition, the RNC performs an RLD process together with the Node B in order to release the common channel for the PTM scheme, which is no longer used (Step 706).

As indicated above, FIGs. 8A and 8B schematically illustrate message formats of messages newly proposed according to an embodiment of the present invention. Messages proposed in the present invention are all NBAP messages, and in an IE/Group column of the message formats, names of information elements (IE) or IE groups constituting a particular message are specified. The IE group is a set of IEs, a combination thereof having a meaning, and for example, RL information 804 illustrated in FIG. 8A is an IE group comprised of NBCC ID 805 and RL ID 806. In addition, Range is a value representing how many times a particular IE or IE group can be repeated.

FIG. 8A illustrates a message format of an MBMS Measurement Initiation Request message. The MBMS Measurement Initiation Request message, as described in conjunction with FIG. 6A, is a message transmitted from an RNC to a Node B, and is used to request the Node B to measure DL_Po of a particular MBMS service. In the MBMS Measurement Initiation Request message, Message Type 801 is an IE indicating a type of a corresponding message, and Measurement ID 802 is an identifier for a measurement request to the Node B through the MBMS Measurement Initiation Request message. That is, both a response message and a report message for the MBMS Measurement Initiation Request message use the same Measurement ID. In addition, Measurement Object Type serves to notify a measurement object, and Measurement Type 808 serves to notify a measurement type. That is, in order to measure the sum of downlink transmission power of dedicated channels for a particular UE_A and a particular UE_B, radio link-related information for the UE_A and UB_B is written in an RL to add IE 803 in Measurement Object Type, and the sum of downlink transmission power is written in Measurement Type 808.

In the present invention, because the RNC measures the sum of downlink transmission power of dedicated channels over which an MBMS service is provided in a PTP scheme, identifiers of dedicated channels for the PTP scheme, i.e., radio links, to be measured, are written in RL ID 806. For example, in FIGs. 6A and 6B, a radio link for the PTP scheme is set up for the UE2, and then an identifier of the radio link is written in NBCC ID 805 and RL ID 806 in step 602. As described above, because the RNC uses NBCC ID in association with an identifier of a particular UE, NBCC ID included in the Radio Link Setup Response message of step 602 is written in NBCC ID 805, and similarly, RL ID used in step 602 is written in RL ID 806. In addition, <maxnoofRLsMBMS> represents the maximum number of RLs, which are measurement objects, and can have the same value as a PTP/PTM threshold. If the number of UEs receiving an MBMS service to be measured from a particular cell in a PTP scheme is x in a process of transmitting the MBMS Measurement Initiation Request message, RL information is inserted x times, and the x cannot be larger than or equal to <maxnoofRLsMBMS>.

If the RNC desires to exclude a particular radio link from the measurement, an identifier of the radio link, i.e., a set of NBCC ID/RL ID is written in RL to delete IE group 807. Measurement Type 808 notifies which measurement type is to be carried out for the measurement objects notified by Measurement ID 802.

In the present invention, a new value called "total transmitted code power" is defined. The total transmitted code power is defined as the sum of transmitted code power of the radio links included in RL information. The transmitted code power is transmission power applied for, particular channelization code transmission of a particular scrambling code for a particular carrier.

5 In addition, Report Characteristics 809 is an IE indicating a transmission time of an MBMS Measurement Report message corresponding to the MBMS Measurement Initiation Request message. As described in the DL_Po reporting procedure of FIG. 5A, when a state in which total transmitted code power exceeds a DL_Po_PTM threshold continues for V_P or longer, an MBMS Measurement Report message is transmitted. Therefore, the DL_Po_PTM threshold and V_P are written in RL to delete 807. Values of the IEs can be appropriately determined according to service types, and their ranges can become 27dBm ∼ 40dBm for the DL_Po_PTM and 10msec ∼ 1 sec for the V_P.

5 A message format of the MBMS Measurement Initiation Response message illustrated in FIG. 8B represents a response to the MBMS Measurement Initiation Request message. This message is transmitted from a Node B to an RNC, and indicates that a measurement identified by Measurement ID 811 is started. That is, it indicates that measurement for total transmitted code power of radio links included in the RL to add IE 803 is started, and measurement for radio links included in the RL to delete IE 807 is suspended.

An MBMS Measurement Report message illustrated in FIG. 8C is a report for the measurement identified by Measurement ID 813. In other words, this message reports to the RNC that a state in which the total transmitted code power is higher than or equal to a PTP/PTM threshold has continued for V_P. In addition, an MBMS Measurement Delete message illustrated in FIG. 8D is a message transmitted from an RNC to a Node B to delete a measurement identified by Measurement ID 815.

As described above, the present invention measures downlink transmission power of a particular MBMS service provided by a Node B and an RNC in a PTP scheme, and applies the measurement results in determining a transmission scheme, thus contributing to an increase in efficiency of transmission resources as compared with the conventional method of determining a transmission scheme by simply considering only the number of UEs. In addition, even though the number of UEs located in a cell is comparatively small, if the UEs are located at the cell boundary, the MBMS service is provided in the PTM scheme thereby consuming less downlink transmission power and thus contributing to an increase in efficiency of downlink transmission resources.

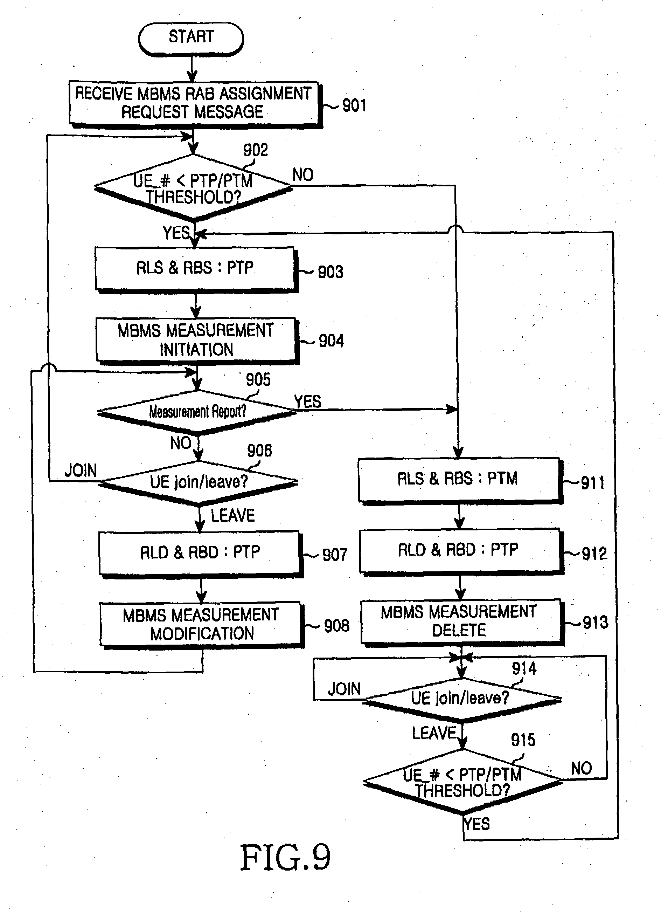

FIG. 9 is a flowchart illustrating an operation of an RNC according to an embodiment of the present invention. Referring to FIG. 9, in step 901, the RNC receives an MBMS RAB Assignment Request message for a particular MBMS service from an SGSN. The RNC determines cells expected to provide the MBMS service and UEs located in the respective cells, using a UE list included in the received MBMS RAB Assignment Request message. Although the RNC determines a transmission scheme for an MBMS service according to cells, it will be assumed in FIG. 9 that the RNC determines a transmission scheme for only one cell, for the convenience of explanation. In step 902, the RNC determines whether the number of UEs located in the cell is smaller than a preset PTP/PTM threshold. If the number of UEs located in the cell is smaller than the PTP/PTM threshold, the RNC proceeds to step 903. In step 903, the RNC determines a PTP scheme as a transmission scheme for an MBMS service of the cell, performs an RLS process and an RBS process according to the PTP scheme together with a Node B and UFs, respectively. In the RLS process, a Radio Link Setup Request message and a Radio Link Setup Response message are exchanged, and in the RBS process, a Radio Bearer Setup message and a Radio Bearer Setup Complete message are exchanged. As described above, in the RLS process and the RBS process, radio links for the PTP transmission scheme are identified by an NBCC ID/RL ID pair.

If the RLS process and the RBS process of step 903 based on the PTP scheme, performed together with UEs located in the cell, are completed, the RNC performs an MBMS measurement initiation process together with the Node B in step 904. In the MBMS measurement initiation process, an MBMS Measurement Initiation Request message and an MBMS Measurement Initiation Response message are exchange as stated above, and a detailed description thereof will be omitted.

In step 905, the RNC determines whether an MBMS Measurement Report message is received from the Node B. If the MBMS Measurement Report message is not received from the Node B, the RNC proceeds to step 906. In step 906, the RNC continuously monitors the number of UEs in the cell. If a new UE joins the MBMS service, the RNC returns to step 902, and if a UE receiving the MBMS service from the cell leaves the MBMS service or moves to another cell reducing the number of UEs in the cell, then the RNC proceeds to step 907. In step 907, the RNC performs an RLD process and an RBD process for the UE that left the MBMS service or moved to another cell. In this case, because the number of UEs was reduced, the PTP scheme is continuously used as the transmission scheme. In step 908, the RNC performs an MBMS measurement modification process in order to delete (suspend) transmission power measurement for a dedicated channel assigned to the UE that left the MBMS service or moved to another cell, and then branches to step 905. That is, the RNC awaits an MBMS Measurement Report message or a change in the number of UEs.

Upon receiving the MBMS Measurement Report message in step 905, the RNC proceeds to step 911. In step 911, the RNC switches an MBMS data transmission scheme of the cell to a PTM scheme, and performs an RLS process and an RBS process according to the PTM scheme. In step 912, the RNC performs an RLD process and an RBD process in order to delete (release) dedicated channels set up based on the PTP scheme, which is the previous transmission scheme. In step 913, because there is no longer a need to measure downlink transmission power according to the PTM scheme, the RNC transmits an MBMS Measurement Delete message to a Node B, and orders the Node B to delete the downlink transmission power measurement.

In step 914, the RNC continuously monitors the number of UEs located in the cell. If the number of UEs located in the cell is increased, the RNC does not perform a separate process. However, if the number of UEs located in the cell is decreased, the RNC proceeds to step 915. In step 915, the RNC determines whether the number of UEs located in the cell is smaller than a PTM/PTP threshold. If the number of UEs located in the cell is larger than or equal to the PTM/PTP threshold, the RNC returns to step 914. However, if the number of UEs located in the cell is smaller than the PTM/PTP threshold, the RNC branches to step 903

if it is determined in step 902 that the number of UEs located in the cell is larger than or equal to the PTP/PTM threshold, the RNC proceeds to step 911. In this case, if dedicated channels for the PTP scheme were previously set up to provide the MBMS service, for example, if the procedure proceeded to step 911 after returning from step 906 to step 902, then the RNC deletes the dedicated channels for the PTP scheme in step 912, transmits an MBMS Measurement Delete message to the Node B in order to delete downlink transmission power measurement in step 913, and then performs the remaining operations, which were described above.

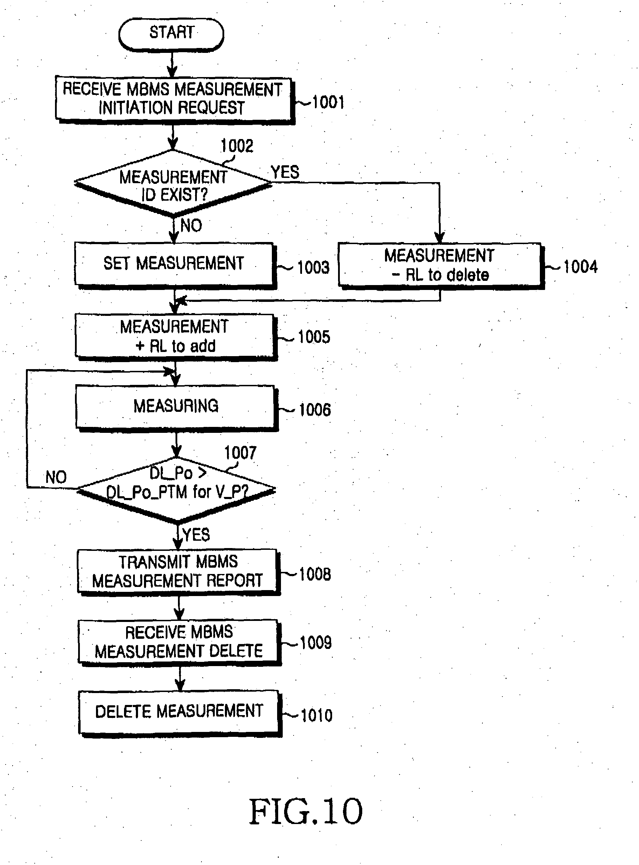

FIG. 10 is a flowchart illustrating an operation of a Node B according to an embodiment of the present invention. Referring to FIG. 10, in step 1001, the Node B receives an MBMS Measurement Initiation Request message from an RNC. In step 1002, the Node B determines whether a downlink transmission power measurement process having the same ID as a Measurement ID included in the MBMS Measurement Initiation Request message exists. If a downlink transmission power measurement process having the same ID as a Measurement ID does not exist, the Node B proceeds to step 1003. In step 1003, the Node B sets up downlink transmission power measurement corresponding to the Measurement ID included in the received MBMS Measurement Initiation Request message. Here, "setting up downlink transmission power measurement" means initiating downlink transmission power measurement using downlink transmission power measurement-related information included in the MBMS Measurement Initiation Request message, and identifying the downlink transmission power measurement with the Measurement ID.

In step 1005, the Node B includes radio links indicated by NBCC ID/RL ID in an RL to add IE included in the MBMS Measurement Initiation Request message, in the downlink transmission power measurement object, and then proceeds to step 1006. In step 1006, the Node B measures transmitted code power, i.e., DL_Po, of radio links included in the downlink transmission power measurement object. In step 1007, the Node B determines whether a state in which the DL_Po exceeds a DL_Po_PTM threshold included in the MBMS Measurement Initiation Request message received in step 1001 continues for V_P or longer. If the state in which the DL_Po exceeds the DL_Po_PTM threshold does not continue for V_P or longer, the Node B returns to step 1006. However, if the state in which the DL_Po exceeds the DL_Po_PTM threshold continues for V_P or longer, the Node B proceeds to step 1008. In step 1008, the Node B transmits an MBMS Measurement Report message to the RNC. In step 1009, the Node B receives an MBMS Measurement Delete message from the RNC, and then proceeds to step 1010, where the Node B deletes a downlink transmission power measurement process having the same ID as a Measurement ID of the received MBMS Measurement Delete message, and then ends the procedure.

However, if it is determined in step 1002 that a downlink transmission power measurement process having the same ID as a Measurement ID of the received MBMS Measurement Initiation Request message exists, the Node B branches to step 1004. In step 1004, the Node B excludes (deletes), from the downlink transmission power measurement object, radio links indicated by NBCC ID/RL ID in an RL to delete IE among information included in the MBMS Measurement Initiation Request message, and then proceeds to step 1005. Because the succeeding operations are the same as described above, a detailed description thereof will not be repeated.

In the present invention, an RNC provides DL_Po_PTM and V_P to a Node B, and the Node B measures DL_Po. Thereafter, when a condition of the DL_Po_PTM and the V_P is satisfied, a request for switching a transmission scheme is provided to the RNC. However, in an alternative embodiment of the present invention, the RNC can determine whether to switch a transmission scheme. That is, a Node B periodically measures DL_Po for each cell and reports the measurement result to an RNC, and the RNC decides to switch the transmission scheme by determining whether the DL_Po satisfies a predetermined condition of DL_Po_PTM and V_P. To this end, message formats proposed in FIGs. 8A to 8D must be partially modified. Among others, the MBMS Measurement Report message illustrated in FIG. 8C should necessarily include an IE for transmitting the DL_Po. In addition, there is no necessity to transmit DL_Po_PTM and V_P through the MBMS Measurement Initiation Request message illustrated in FIG. 8A.

As described above, the present invention determines a transmission scheme for an MBMS service considering not only the number of UEs requesting MBMS data, located in a corresponding cell, but also the total downlink transmission power of radio channels for transmitting MBMS data' in a mobile communication system providing the MBMS service, thereby increasing efficiency of downlink transmission resources.

5 While the present invention has been shown and described with reference to a certain preferred embodiment thereof, it will be understood by those skilled in the art that various changes in form and details may be made therein without departing from the spirit and scope of the invention as defined by the appended claims.

## Claims

1. A method for switching a type of a transmission scheme to a point-to-multipoint (PTM) scheme, by a Node B, which provides an MBMS (Multimedia Broadcast/Multicast Service) service to at least one user equipment (UE) in a point-to-point (PTP) scheme as the transmission scheme, in a mobile communication system including the at least one UE located in a cell, the UE receiving the MBMS service via the cell, and a radio network controller (RNC) providing the MBMS service to the at least one UE via the cell, the mobile communication system determining the type of the transmission scheme according to a number of the at least one UE receiving the MBMS service within the cell, the method comprising the steps of:
receiving, by the at least one UE, a measurement command from the RNC;
upon receiving the measurement command, measuring, by the at least one UE, total transmission power of a dedicated channel providing the MBMS service, for the cell; and
receiving, by the at least one UE, a power threshold and a waiting time provided from the RNC before receiving the measurement command, and sending a request for switching the transmission scheme to the RNC, if the measured total transmission power exceeds the power threshold for the waiting time.

2. The method of claim 1, further comprising the step of, upon receiving a measurement delete command in response to the transmission scheme switching request, suspending measurement of the total transmission power and then assigning a radio resource for providing the MBMS service in the PTM scheme.

3. The method of claim 1, wherein the measurement command comprises radio link identifier information for identifying at least one dedicated channel providing the MBMS service in the PTP scheme and Node B communication context (NBCC) identifier information for identifying the at least one UE receiving the MBMS service.

4. The method of claim 1, wherein the measurement command comprises radio link identifier information for identifying at least one dedicated channel providing the MBMS service in the PTP scheme as radio link information desired to be excluded from the measurement, and NBCC identifier information for identifying the at least one UE receiving the MBMS service.

5. The method of claim 3, wherein the transmission scheme switching request is transmitted along with a measurement identifier corresponding to the radio link identifier and the NBCC identifier.

6. The method of claim 1, wherein the power threshold and the waiting time are provided during initialization for measurement of the total transmission power.

7. The method of claim 1, wherein the transmission scheme switching request is determined by reporting the measurement result.

8. A method for switching a type of a transmission scheme to a point-to-multipoint (PTM) scheme by a radio network controller (RNC), which provides an MBMS (Multimedia Broadcast/Multicast Service) service to at least one user equipment (UE) in a point-to-point PTP scheme as the transmission scheme; in a mobile communication system including the at least one UE located in a cell in a Node B, the at least one UE receiving the MBMS service via the cell, and the RNC providing the MBMS service to the at least one UE via the Node B, the mobile communication system determining the type of the transmission scheme according to a number of the at least one UE receiving the MBMS service within the cell, the method comprising the steps of:
providing, by the RNC, a power threshold and a waiting time to the Node B, and issuing a command to measure total transmission power of a dedicated channel providing the MBMS service in the cell;
receiving, by the RNC, a report on the measurement result from the Node B, in which the total transmission power measured in response to the measurement command exceeds the power threshold for the waiting time; and
switching, by the RNC, the type of the transmission scheme to the PTM scheme upon receiving the report on the measurement result.

9. The method of claim 8, wherein upon receiving the report on the measurement result, the RNC transmits a command to suspend measurement of the total transmission power to the Node B and assigns a radio resource for providing the MBMS service in the PTM scheme, thereby switching the type of the transmission scheme to the PTM scheme.

10. The method of claim 8, wherein the measurement command comprises radio link identifier information for identifying at least one dedicated channel providing the MBMS service in the PTM scheme, and Node B communication context (NBCC) identifier information for identifying the UE receiving the MBMS service.

11. The method of claim 8, wherein the measurement command comprises radio link identifier information for identifying at least one dedicated channel providing the MBMS service in the PTP scheme as radio link information desired to be excluded from the measurement, and NBCC identifier information for identifying the UE receiving the MBMS service.

12. The method of claim 10, wherein the measurement result report is transmitted along with a measurement identifier corresponding to the radio link identifier and the NBCC identifier.

13. The method of claim 8, wherein the power threshold and the waiting time are provided during initialization, for measurement of the total transmission power.

14. , A method for switching a transmission scheme for providing an MBMS (Multimedia Broadcast/Multicast Service) service to a particular cell from a point-to-point (PTP) scheme to a point-to-multipoint (PTM) scheme, in a mobile communication system including at least one user equipment (UE) located in a cell in a Node B, the at least one UE receiving the MBMS service via the cell, and a radio network controller (RNC) providing the MBMS service to the at least one UE via the Node B, the mobile communication system determining the type of the transmission scheme according to a number of the at least one UE receiving the MBMS service within the cell, the method comprising the steps of:
providing, by the RNC, a power threshold and a waiting time to the Node B, and issuing a command to measure total transmission power of a dedicated channel providing the MBMS service in the cell;
upon receiving the measurement command, measuring, by the Node B, total transmission power of a dedicated channel providing the MBMS service for the cell, and transmitting a report on the measurement result to the RNC, if the measured total transmission power exceeds the power threshold for the waiting time; and
switching, by the RNC, the type of the transmission scheme to the PTM scheme based on the report on the measurement result.

15. The method of claim 14, wherein the step of switching the type of the transmission scheme comprises the steps of:
sending, by the RNC, a command to suspend measurement of the total transmission power, to the Node B: and
assigning, by the RNC, a radio resource for providing the MBMS service in the PTM scheme.

16. The method of claim 14, wherein the measurement command comprises radio link identifier information for identifying at least one dedicated channel providing the MBMS service in the PTM scheme, and Node B communication context (NBCC) identifier information for identifying the UE receiving the MBMS service.

17. The method of claim 14, wherein the measurement command comprises radio link identifier information for identifying at least one dedicated channel providing the MBMS service in the PTP scheme as radio link information desired to be excluded from the measurement, and NBCC identifier information for identifying the UE receiving the MBMS service.

18. The method of claim 16, wherein the measurement result report is transmitted along with a measurement identifier corresponding to the radio link identifier and the NBCC identifier.

19. The method of claim 14, wherein the power threshold and the waiting time are provided during initialization for measurement of the total transmission power.

20. A method for switching a type of a transmission scheme to a point-to-multipoint (PTM) scheme by a radio network controller (RNC), which provides an MBMS (Multimedia Broadcast/Multicast Service) service to at least one user equipment (UE) in a point-to-point (PTP) scheme as the transmission scheme, in a mobile communication system including the at least one UE located in a cell in a Node B, the at least one UE receiving the MBMS service via the cell, and the RNC providing the MBMS service to the at least one UE via the Node B, the mobile communication system determining the type of the transmission scheme according to a number of the at least one UE receiving the MBMS service within the cell, the method comprising the steps of:
transmitting, from the RNC to the Node B, a command to measure total transmission power of a dedicated channel providing the MBMS service in the cell;
receiving, by the RNC, a report on the total transmission power measured in response to the measurement command from the Node B; and
switching, by the kNC, the type of the transmission scheme to the PTM scheme, if the reported total transmission power exceeds a predetermined power threshold for a predetermined waiting time.

21. The method of claim 20, wherein the step of switching the type of the transmission scheme comprises the steps of:
transmitting a command to suspend measurement of the total transmission power, from the RNC to the Node B; and
assigning a radio resource for providing the MBMS service in the PTM scheme.

22. The method of claim 20, wherein the measurement command comprises radio link identifier information for identifying at least one dedicated channel providing the MBMS service in the PTP scheme, and Node B communication context (NBCC) identifier information for identifying the UE receiving the MBMS service.

23. The method of claim 20, wherein the measurement command comprises radio link identifier information for identifying at least one dedicated channel providing the MBMS service in the PTP scheme as radio link information desired to be excluded from the measurement, and NBCC identifier information for identifying the UE receiving the MBMS service.

24. The method of claim 22, wherein the measurement result report is transmitted along with a measurement identifier corresponding to the radio link identifier and the NBCC identifier.

25. A method for determining a transmission scheme for an MBMS (Multimedia Broadcast/Multicast Service) service to at least one user equipment (UE) by a radio network controller (RNC) in a mobile communication system including the at least one UE located in a cell of a particular Node B, the at least one UE receiving the MBMS service via the cell, and the RNC providing the MBMS service to the at least one UE via the Node B, the method comprising the steps of:
transmitting, to the Node B, a measurement command to measure total transmission power of a dedicated channel providing the MBMS service in the cell;
determining whether a number of the at least one UE receiving the MBMS service within the cell reaches a predetermined threshold; and
determining a point-to-multipoint (PTM) scheme as a type of the transmission scheme, if the number of the at least one UE reaches the predetermined threshold and the total transmission power measured by the Node B in response to the measurement request exceeds a predetermined power threshold for a predetermined waiting time.
